# EUROPEAN PATENT APPLICATION

(11) **EP 2 566 170 A2**
(43) Date of publication of application: **06.03.2013**
(21) Application number: 12160080.3
(22) Date of filing: 19.03.2012
(51) Int. Cl.: H04N 21/231, H04N 21/4335, H04N 5/445

(54) **Electronic apparatus and delivery control method**

(30) Priority: 31.08.2011 JP 2011189799
(71) Applicant: Kabushiki Kaisha Toshiba, Tokyo 105-8001 (JP)
(72) Inventor: Yoshida, Osamu, Tokyo, 105-8001 (JP)
(74) Representative: HOFFMANN EITLE

(57) **Abstract**

According to one embodiment, an electronic apparatus includes a recoding controller (13), a capability information receiver (213) and a content information transmitter (211). The recoding controller (13) records a plurality of broadcast video content data and a plurality of content information pieces in a storage device and successively erases first video content data from a beginning part of video when a data amount of the plurality of broadcast video content data exceeds a threshold. The capability information receiver (213) receives capability information indicative of whether the client apparatus has a function of controlling playback of the first video content data, from the client apparatus. The content information transmitter (211) transmits to the client apparatus the plurality of content information pieces including first content information associated with the first video content data if the apparatus capability information indicates that the client apparatus has the function.

## Description

Embodiments described herein relate generally to an electronic apparatus which records and plays back video content data, and a delivery control method which is applied to the electronic apparatus.

An electronic apparatus having a recording function, such as a personal video recorder, has, in some cases, a loop recording function of successively recording programs (video content data) which are broadcast by, e.g. terrestrial digital broadcasting, and successively erasing programs which were recorded in the past, when the amount of recorded data exceeds the capacity of recording media, thereby storing programs that have been broadcast within a most recent predetermined time period. For example, programs of plural channels are simultaneously received and programs, which are broadcast by the respective channels, are loop-recorded. Thereby, a user can view a program which was broadcast in the past (in the most recent predetermined period), like a program which is being currently broadcast.

Digital Living Network Alliance (DLNA) stipulates an architecture for delivering video content data, music data, etc., which are stored in a server apparatus (digital media server: DMS) such as a personal video recorder, to a client apparatus (e.g. digital media player: DMP), such as a television receiver, a smartphone or a PDA, via a network.

Thus, if the electronic apparatus having the above-described loop recording function includes the server apparatus (DMS), the recorded program can be delivered to the client apparatus (DMP) via the network. The user, who uses the client apparatus, can view the delivered program.

However, in the delivery by the DLNA, it is not assumed that recorded programs, which are successively erased, are delivered. For example, there is a case in which at the time of start of delivery of a program, the program was present from its start time point to end time point, but this program has begun to be erased from the beginning part while this program is being viewed on the DMP side. In such a case, if a jump to the beginning part of the program is attempted, an error occurs since the target part is absent, and normal playback is disabled.

In addition, when a program table is viewed (browsed) on the DMP side, there is no means for properly recognizing a timing at which displayed content is to be erased, and thus it is not possible to present, to the user, display including the timing at which the content is erased. Hence, the user may possibly fail to view the stored program.

A general architecture that implements the various features of the embodiments will now be described with reference to the drawings. The drawings and the associated descriptions are provided to illustrate the embodiments and not to limit the scope of the invention.
FIG. 1 is a block diagram illustrating an example of the structure of an electronic apparatus according to an embodiment.
FIG. 2 is a block diagram illustrating an example of the structure of a client apparatus connected to the electronic apparatus of the embodiment via a network.
FIG. 3 is a view illustrating an example of a communication sequence which is executed between the client apparatus and the electronic apparatus of the embodiment.
FIG. 4 is a view illustrating another example of the communication sequence which is executed between the client apparatus and the electronic apparatus of the embodiment.
FIG. 5 is a view illustrating an example of apparatus capability information which is transmitted to the client apparatus by the electronic apparatus of the embodiment.
FIG. 6 is a view illustrating an example of apparatus capability information which is transmitted from the client apparatus to the electronic apparatus of the embodiment.
FIG. 7 is a view illustrating an example of program information which is transmitted to the client apparatus from the electronic apparatus of the embodiment.
FIG. 8 is a view illustrating another example of the program information which is transmitted to the client apparatus from the electronic apparatus of the embodiment.
FIG. 9 is a view illustrating an example of a recorded program table in a program guide format, which is displayed by the electronic apparatus of the embodiment.
FIG. 10 is a view illustrating an example of a recorded program table in a program guide format, which is displayed by the client apparatus connected to the electronic apparatus of the embodiment.
FIG. 11 is a view illustrating an example of a recorded program table in a tree format, which is displayed by the client apparatus connected to the electronic apparatus of the embodiment.
FIG. 12 is a view illustrating an example of a recorded program table in a list format, which is displayed by the client apparatus connected to the electronic apparatus of the embodiment.
FIG. 13 is a flowchart illustrating an example of the procedure of a program information delivery process which is executed by the electronic apparatus of the embodiment.
FIG. 14 is a flowchart illustrating an example of the procedure of a program information reception process which is executed by the client apparatus connected to the electronic apparatus of the embodiment.
FIG. 15 is a view illustrating still another example of the communication sequence which is executed between the client apparatus and the electronic apparatus of the embodiment.
FIG. 16 is a view illustrating still another example of the communication sequence which is executed between the client apparatus and the electronic apparatus of the embodiment.

Various embodiments will be described hereinafter with reference to the accompanying drawings.

In general, according to one embodiment, an electronic apparatus, which is mutually connected to a client apparatus via a network, includes a recoding controller, a capability information receiver, and a content information transmitter. The recoding controller records a plurality of broadcast video content data and a plurality of content information pieces in a storage device and successively erases first video content data of the plurality of broadcast video content data from a beginning part of video when a data amount corresponding to the plurality of broadcast video content data in the storage device exceeds a threshold, the plurality of content information pieces being associated with the plurality of broadcast video content data. The capability information receiver receives first apparatus capability information from the client apparatus, the first apparatus capability information being indicative of whether the client apparatus has a first function of controlling playback of the first video content data which is successively erased from the beginning part of the video. The content information transmitter transmits the plurality of content information pieces including first content information to the client apparatus if the first apparatus capability information indicates that the client apparatus has the first function, the first content information being associated with the first video content data.

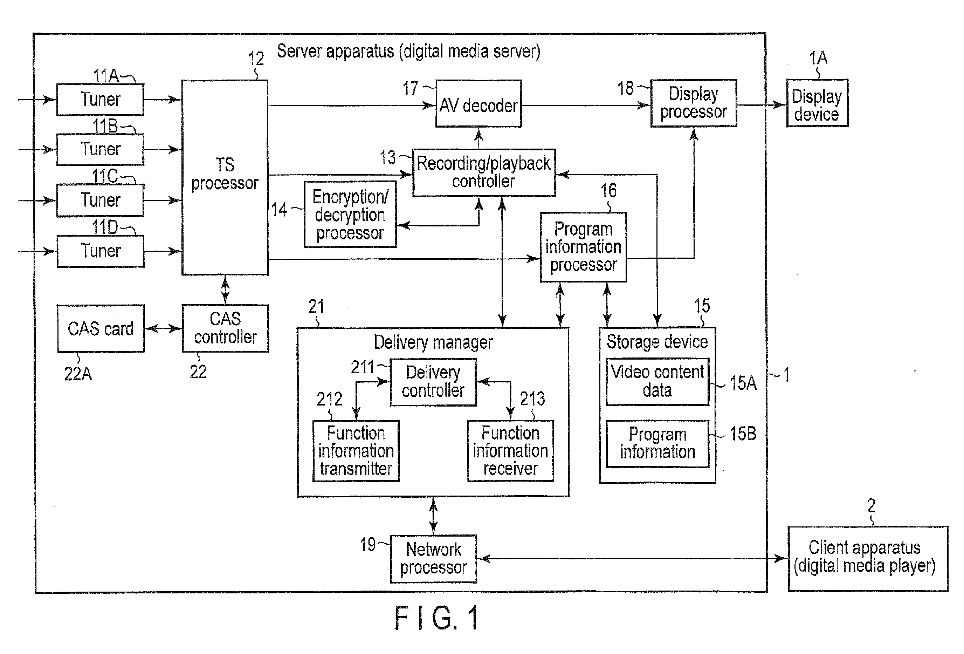

To begin with, referring to FIG. 1, an example of the structure of an electronic apparatus according to an embodiment is described. This electronic apparatus is a server apparatus (digital media server) 1 which delivers video content data 15A to a client apparatus 2 via a network. The server apparatus 1 and the client apparatus 2 are mutually connected via, e.g. a local area network (LAN). The server apparatus 1 may be realized, for example, as a personal video recorder, a set-top box, or a server computer.

The server apparatus 1 is also a digital broadcast reception apparatus having a function of receiving a program (hereafter, also referred to as "video content data") which is broadcast by, e.g. terrestrial digital broadcasting, and recording the received program. In addition, the server apparatus 1 has a loop recording function of successively recording programs, in units of a channel, which are broadcast by terrestrial digital broadcast or satellite digital broadcast, continuing the recording while timely erasing recorded programs from the oldest content, depending on the residual capacity of a storage device, and storing only programs in a most recent predetermined time period. Thus, the user can view a program which was broadcast in the past, like a program which is being currently broadcast (also referred to as "time-shift viewing"), and can perform a special playback (reproduction) function, such as fast forward or rewind, since the program that is viewed is a recorded content.

In addition, in the method of timely erasure in this loop recording function, for example, when the data amount of recorded programs exceeds a threshold, the video of a program having the oldest broadcast date/time (recording date/time) is successively erased from the beginning part thereof. This threshold is a value which is calculated by dividing the capacity of the recording medium by the number of channels of recording, and by calculating an approximate retrospective time from the present time point, based on the recording rate (e.g. recording rate per channel: 17 Mbps). For example, there are some erasure methods in which the video of programs is successively erased from the threshold from the beginning part thereof, or programs relating to this threshold are erased in units of a program.

The server apparatus 1 includes tuners 11A, 11B, 11C and 11D, a TS processor 12, a recording/playback controller 13, an encryption/decryption processor 14, a storage device 15, a program information processor 16, an AV decoder 17, a display processor 18, a network processor 19, a delivery manager 21, and a CAS controller 22. The server apparatus 1 is connected to a display device 1A. The display device 1A is, for instance, a liquid crystal display (LCD).

The tuner 11A, 11B, 11C, 11D selects a broadcast signal of a channel which is selected by the user, from digital television (TV) broadcast signals which are received by an antenna. The server apparatus 1 can select broadcast signals of that number of channels, which corresponds to the tuners 11A, 11B, 11C and 11D. FIG. 1 shows an example in which the number of tuners 11A, 113, 11C and 11D is four, but an arbitrary number of tuners can be provided in the server apparatus 1. The tuners 11A, 11B, 11C and 11D output demodulated broadcast signals of the selected channels to the TS processor 12.

The TS processor 12 separates a TS-packetized broadcast signal of the channel selected by the tuner 11A, 11B, 11C, 11D, into a digital video signal and a digital audio signal, and outputs them to the recording/playback controller 13 and AV decoder 17. In addition, the TS processor 12 separates an ECM packet from the input broadcast signal, sends the ECM packet to a connected CAS card 22A via the CAS controller 22, and executes a descramble process using a key which is returned. Furthermore, the TS processor 12 separates an SDT and an EIT from the input broadcast signal, and outputs them to the program information processor 16.

The recording/playback controller 13 stores the digital video signal and audio signal, which have been output by the TS processor 12, in the storage device 15 as video content data 15A. The recording/playback controller 13 continues to successively record, for example, the video content data (programs) 15A of plural channels selected by the tuners 11A, 11B, 11C and 11D. For example, the recording/playback controller 13 stores, in the storage device 15, all broadcast programs of plural channels (e.g. 6 channels or 8 channels) in a most recent predetermined period (e.g. one day or one week). In addition, where necessary, the video content data 15A is encrypted, for example, by a predetermined system by the encryption/decryption processor 14, and then stored in the storage device 15. The storage device 15 is, for instance, an internal HDD in the server apparatus 1. Incidentally, the storage device 15 may be an HDD which is externally connected to the server apparatus 1.

The recording/playback controller 13 executes control to erase content data in the video content data 15A, for example, when the data amount of the video content data 15A stored in the storage device 15 has exceeded a predetermined threshold.

In the method of erase, for example, when one day is set as the threshold, the threshold is a time point which is 24 hours before the present time point. With the passing of the actual time, the threshold also progresses. In one method, video content data, which relates to the threshold, is erased in accordance with the speed of the progress of the threshold. In another method, a program, which relates to the threshold, is erased in units of the program (from the beginning time point to the end time point).

Specifically, from the video content data with the oldest broadcast date/time (recording date/time), the video data is successively erased from the beginning part thereof, or the video data is erased in units of a program.

In addition, responding to the user's request, the recording/playback controller 13 reads the video content data from the storage device 15. In the case where the read video content data 15A is encrypted, the video content data 15A is decrypted by the encryption/decryption processor 14 and is then output to the AV decoder 17.

The program information processor 16 stores program information 15B in the storage device 15. The program information 15B (also referred to as "content information") corresponds to the video content data 15A which is recorded by the recording/playback controller 13. Specifically, the program information processor 16 generates the program information 15B, which is associated with the video content data 15A, from the program information (SDT or EIT) which is output by the TS processor 12. In addition, the program information processor 16 stores the generated program information 15B in the storage device 15. In some cases, aside from the program information that is added to the broadcast signal, for example, program information, which is received from an external server via the network processor 19, is used as the program information 15B. The program information 15B corresponding to a certain program includes, for example, the title of the program, the channel number, the name of the broadcast station, and the broadcast date/time. The program information 15B may further include information indicative of an erasure timing of a program (e.g. a date/time of start of erasure, or how many days after the start of recording the erasure is to be executed).

The erasure timing of a program is managed by the recording/playback controller 13 and is determined, for example, based on a predetermined available (playable) period (e.g. one week from the present time point), or based on the relationship between the recording capacity of the storage device 15 and the total data amount of the stored video content data 15A.

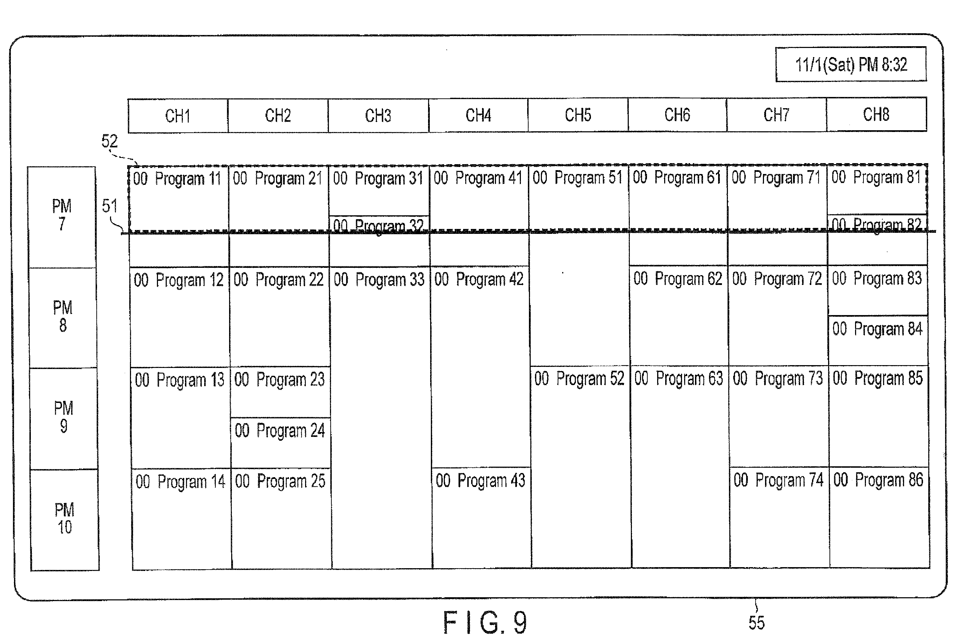

The program information processor 16 reads the program information 15B from the storage device 15, for example, in response to the user's request. Based on the read program information 15B, the program information processor 16 generates an On-Screen Display (OSD) signal for displaying a table (i.e. recorded program table) including objects indicative of the respective video content data 15A stored in the storage device 15. This recorded program table is displayed, for example, as a table in a program guide format, a table in a tree format or a table in a list format. In addition, the objects indicative of the video content data 15A are, for example, a button, text, or a cell in a list or table. The recorded program table may further include an object indicative of a timing at which recorded programs are erased (e.g. a boundary bar indicating up to which part of a program has already been erased). The program information processor 16 outputs the generated OSD signal to the display processor 18. An example of the recorded program table will be described later with reference to FIG. 9.

The AV decoder 17 decodes digital video signals and audio signals which are output from the TS processor 12 and recording/playback controller 13. For example, the video signal is compression-encoded in a predetermined format (e.g. MPEG-2, or H.264). Thus, the AV decoder 17 decodes the compression-encoded video signal. The AV decoder 17 outputs the decoded video signal and audio signal to the display processor 18.

The display processor 18 converts the digital video signal, which has been output by the AV decoder 17, to an analog video signal which can be displayed by the display device 1A. The display processor 18 outputs the analog video signal to the display device 1A. The display device 1A displays video on the screen by using the analog video signal which has been output by the display processor 18. In addition, the display processor 18 can also output an OSD signal, such as captions (subtitles) or a program guide, to the display device 1A. The display processor 18 outputs to the display device 1A, for example, the OSD signal for displaying the recorded program table, which has been output by the program information processor 16. Using the video signal and OSD signal, the display device 1A displays a video image, on which captions and a program table are superimposed, on the screen. In the meantime, the display processor 18 can selectively output the video signal or the OSD signal to the display device 1A.

In addition, the display processor 18 may convert the digital audio signal, which has been output by the AV decoder 17, to an analog audio signal which can be played by a speaker. The display processor 18 outputs this analog audio signal, for example, to a speaker (not shown) provided on the display device 1A. The speaker plays audio, based on the input analog audio signal.

Next, the network processor 19 controls communication between the server apparatus 1 and the client apparatus 2 via a network. Specifically, the network processor 19 detects that the server apparatus 1 and the client apparatus 2 have been connected via the network. The network processor 19 notifies the delivery manager 21 that the client apparatus 2 has been connected. In addition, the network processor 19 transmits data to the client apparatus 2, responding to requests by respective components in the server apparatus 1. Besides, the network processor 19 receives data which has been transmitted by the client apparatus 2, and outputs the received data to the respective components in the server apparatus 1.

When a content delivery request has been issued from the client apparatus 2, the delivery manager 21 executes a negotiation with the client apparatus 2 via the network processor 19, and controls the program information 15B and video content data 15A, which are delivered to the client apparatus 2, in accordance with the result of the negotiation. The delivery manager 21 includes a delivery controller 211, a function information transmitter 212 and a function information receiver 213.

In response to the notification of the connection of the client apparatus 2 by the network processor 19, the delivery controller 211 requests the function information transmitter 212 to transmit apparatus capability information (first apparatus capability information) indicative of the function, which is possessed by the server apparatus 1, to the client apparatus 2.

Complying with the request by the delivery controller 211, the function information transmitter 212 transmits the apparatus capability information indicative of the function, which is possessed by the server apparatus 1, to the client apparatus 2. The apparatus capability information of the server apparatus 1 is, for example, information indicating which standard the delivery control function of the server apparatus 1 is based on, and what kind of content, which is to be delivered, can be controlled. The capability of delivery in the present embodiment means the capability of delivering not only the content which is protected in units of a program (the beginning time or the end time of the program is not changed and the program is not erased, while the program is playing), but also the content, such as the above-described loop-recorded content, which is not protected in units of a program and is erased from the beginning part of the program.

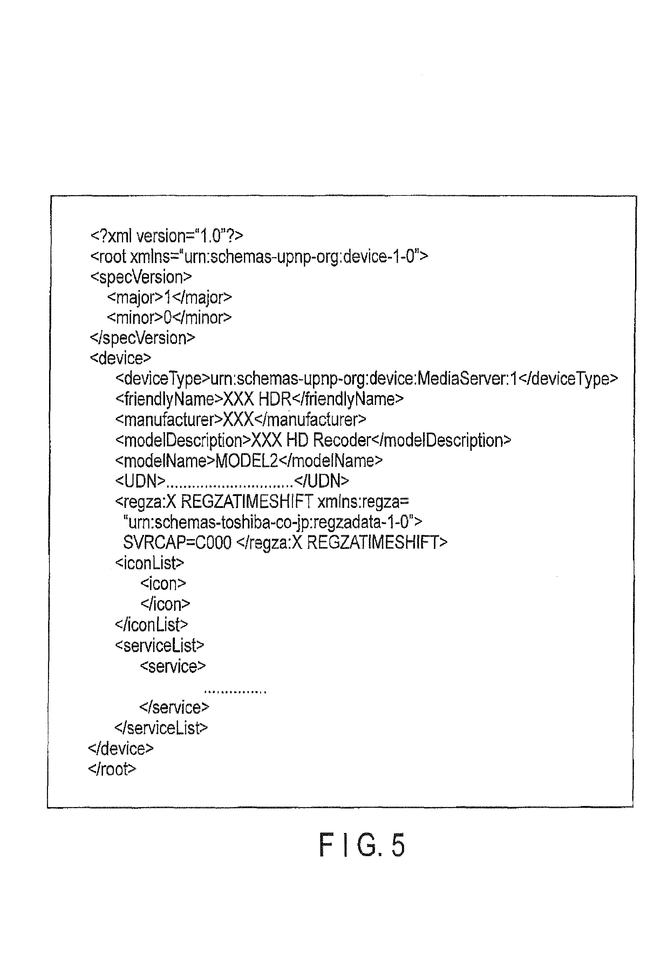

An example of the apparatus capability information of the server apparatus 1 will be described later with reference to FIG. 5.

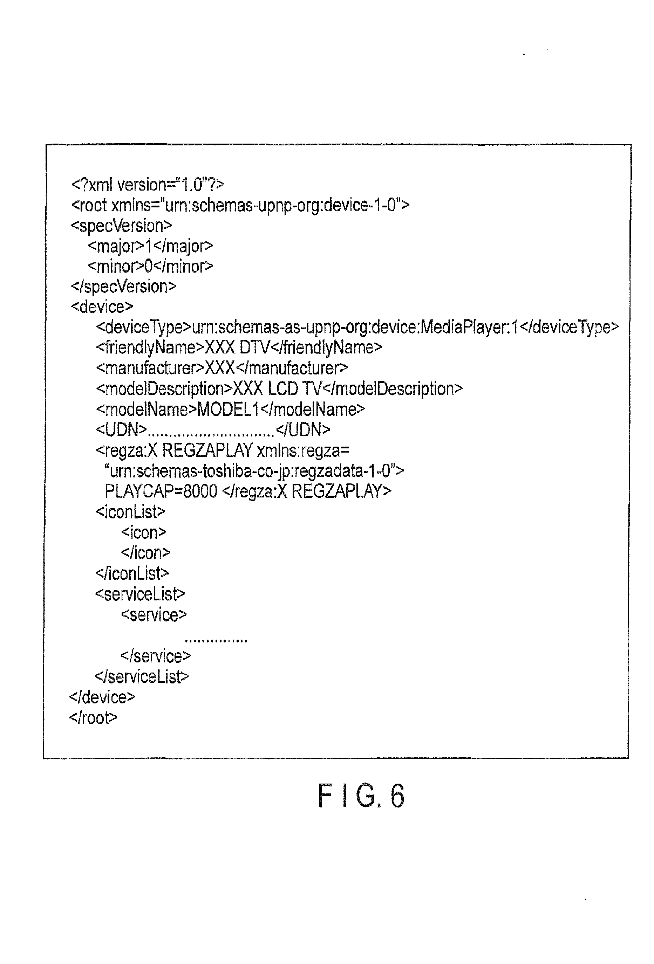

The function information receiver 213 receives apparatus capability information (second apparatus capability information) which is transmitted by the client apparatus 2 and is indicative of the function possessed by the client apparatus 2. The apparatus capability information of the client apparatus 2 is, for example, information indicating what kind of playback control function is possessed by the client apparatus 2. The information indicative of this playback control function may be information indicating that the content which is protected in units of a program (the beginning time or the end time of the program is not changed and the program is not erased, while the program is playing) can be played as in the case of an ordinary DMP, or may be information indicating that the content, such as the above-described loop-recorded content, which is not protected in units of a program and is erased from the beginning part of the program, can be played. The function information receiver 213 outputs the received apparatus capability information of the client apparatus 2 to the delivery controller 211. An example of the apparatus capability information of the client apparatus 2 will be described later with reference to FIG. 6.

The delivery controller 211 determines whether the client apparatus 2 has the playback control function, based on the apparatus capability information of the client apparatus 2, which has been output by the function information receiver 213. When delivery of program information has been requested by the client apparatus 2, the delivery controller 211 transmits first program information to the client apparatus 2 if the client apparatus 2 has the playback control function of content that is not protected in units of a program, and transmits second program information to the client apparatus 2 if the client apparatus 2 does not have this playback control function. The first program information is program information which is generated by excluding, from the program information 15B, program information corresponding to programs (video content data) which have been erased from the storage device 15. Accordingly, the first program information includes program information in the program information 15B, which corresponds to programs which have begun to be erased from the storage device 15 (i.e. programs which are being currently erased). Incidentally, the first program information may include information relating to the threshold of erasure (i.e. information indicative of a timing of erasure). On the other hand, the second program information is program information which is generated by excluding, from the program information 15B, program information corresponding to programs which have been erased from the storage device 15 and programs which have begun to be erased from the storage device 15. Further, in the second program information, program information corresponding to programs which will shortly begin to be erased (e.g. programs, the time until the start of erasure of which is a second threshold or less) may be excluded. In the meantime, the first program information and second program information may include program information corresponding to video content data which is being currently recorded (i.e. video content data which has been recorded up to a certain part of a program).

Specifically, the delivery controller 211 requests the program information processor 16 to generate the first program information or second program information. Responding to the request by the delivery controller 211, the program information processor 16 generates the first program information or second program information, by using the program information 15B stored in the storage device 15. The delivery controller 211 transmits the generated first program information or second program information to the client apparatus 2 via the network processor 19.

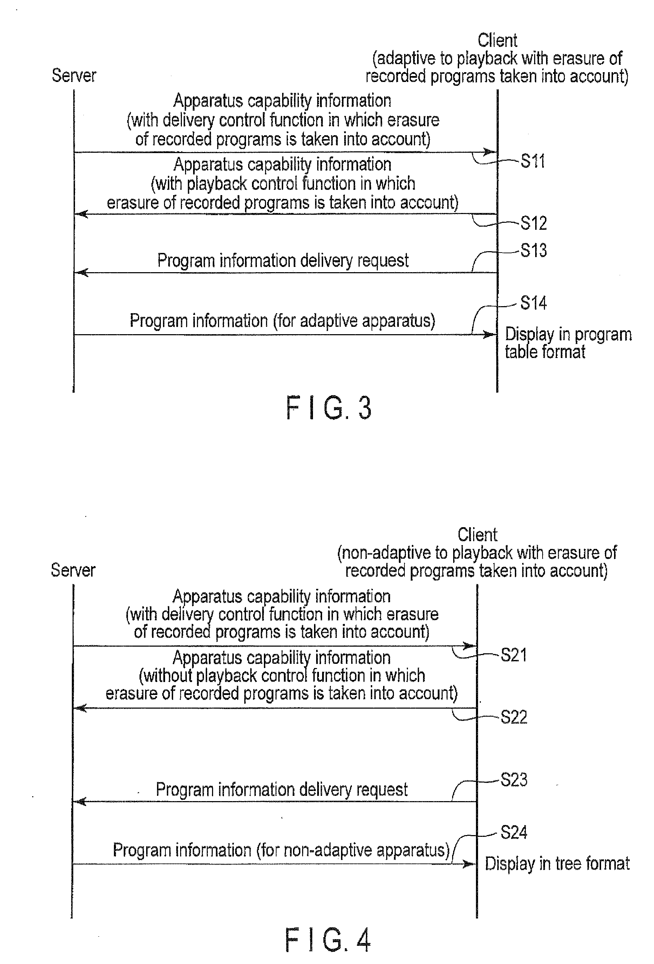

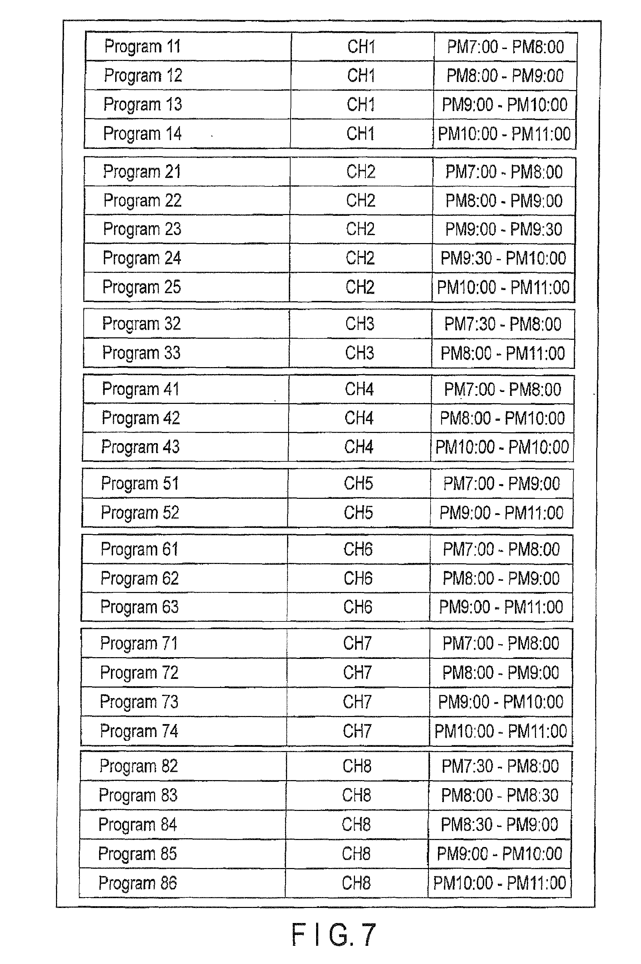

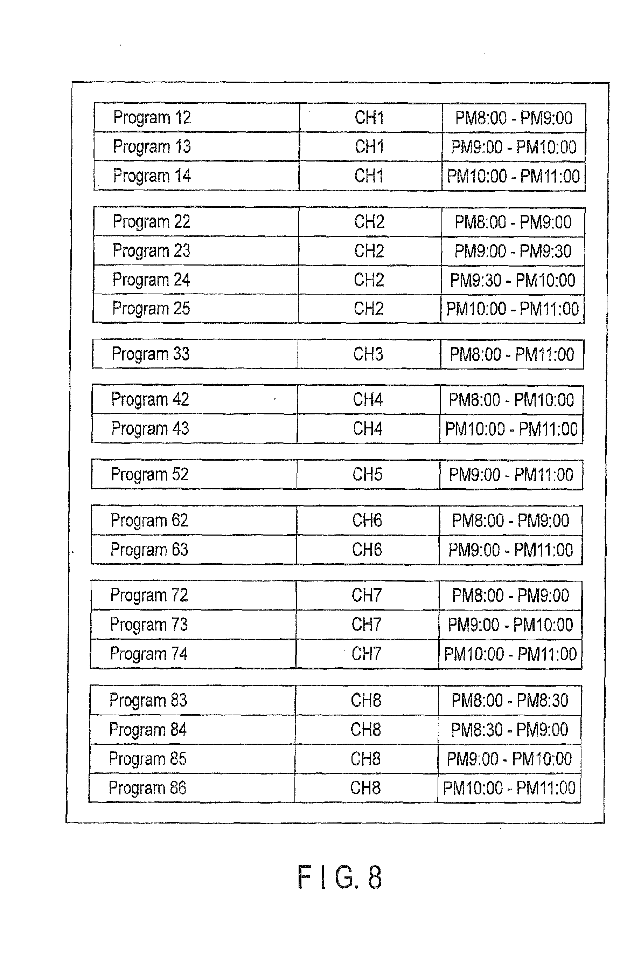

By the above-described structure, the first program information or second program information is transmitted to the client apparatus 2, in accordance with the result of negotiations between the server apparatus 1 and client apparatus 2. The negotiations will be described later with reference to FIG. 3 and FIG. 4. Examples of the first program information and second program information will be described later with reference to FIG. 7 and FIG. 8.

In addition, responding to the request for delivery of video content data by the client apparatus 2, the delivery controller 211 transmits the video content data 15A, which is stored in the storage device 15, to the client apparatus 2. Specifically, responding to the request by the client apparatus 2, the delivery controller 211 requests the recording/playback controller 13 to read the requested video content data 15A. Complying with the request by the delivery controller 211, the rooording/playback controller 13 reads the requested video content data 15A from the storage device 15. Then, the delivery controller 211 transmits the read video content data 15A to the client apparatus 2. When the video content data 15A, the delivery of which has been requested, is data which has begun to be erased, the delivery controller 211 transmits that part of the video content data 15A, which has not yet been erased.

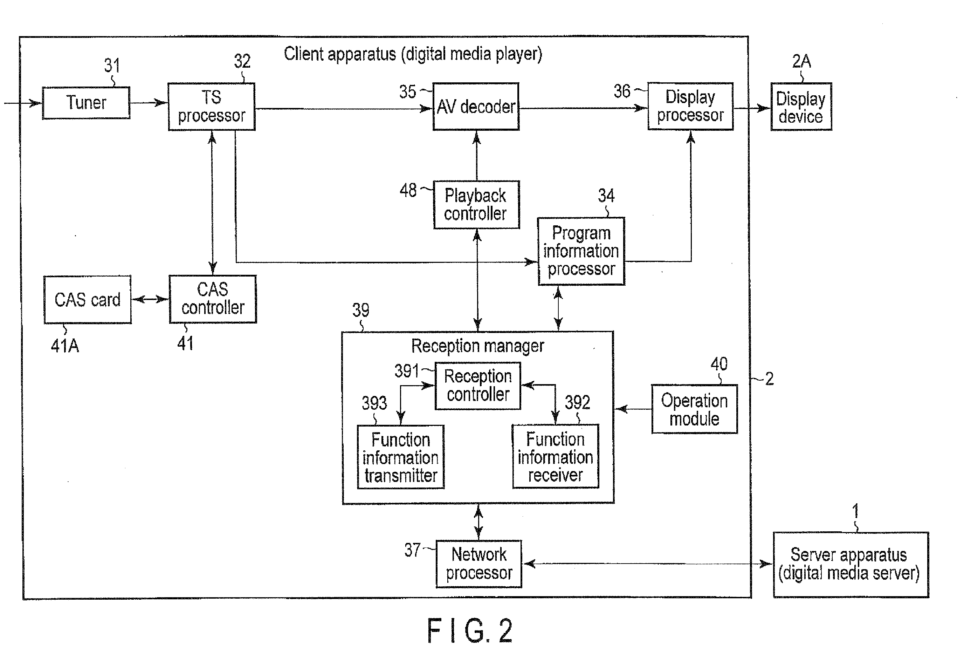

FIG. 2 shows an example of the structure of the client apparatus (digital media player) 2. As has been described above, the server apparatus 1 and the client apparatus 2 are mutually connected via, e.g. a local area network (LAN). The client apparatus 2 may be realized, for example as a television (TV) receiver, a smartphone or a PDA.

The client apparatus 2 has a playback control function of receiving via the network a program (video content data) 15A which has been delivered by the server apparatus 1, and controlling playback of the received program. In addition, the client apparatus 2 has a table display function of receiving program information (content information) which has been delivered by the server apparatus 1, and displaying a recorded program table by using the received program information. As described above, in the server apparatus 1, when the data amount of the recorded programs has exceeded the threshold, the video of programs with the old broadcast date/time are successively erased from the beginning part thereof. In addition, in the server apparatus 1, for example, when the elapsed time from the recording of a program has exceeded a first threshold time, the video of this program is successively erased from the beginning part thereof. Thus, the client apparatus 2 displays, on the displayed recorded program table, information indicative of an erasure timing of programs.

The client apparatus 2 includes a tuner 31, a TS processor 32, a program information processor 34, an AV decoder 35, a display processor 36, a network processor 37, a reception manager 39, an operation module 40, and a CAS controller 41. The client apparatus 2 is connected to a display device 2A such as an LCD. The display device 2A may be provided within the client apparatus 2.

The tuner 31 selects a broadcast signal of a channel which is selected by the user, from digital television (TV) broadcast signals which are received by an antenna. The tuner 31 outputs a broadcast signal of the selected channel to the TS processor 32.

The TS processor 32 separates a TS-packetized broadcast signal of the channel selected by the tuner 31, into a digital video signal and a digital audio signal, and outputs them to the playback controller 48 and AV decoder 35. In addition, the TS processor 32 separates an ECM packet from the input broadcast signal, sends the ECM packet to a connected CAS card 41A via the CAS controller 41, and executes a descramble process using a key which is returned. Furthermore, the TS processor 32 separates an SDT and an EIT from the input broadcast signal, and outputs them to the program information processor 34.

The program information processor 34 generates program information, which corresponds to video content data (program) that is being broadcast (received), by using the digital video signal and audio signal which have been output by the TS processor 32. This program information is generated by using, for example, metadata which is added to the video signal. The program information includes, for example, the title of the program, the channel number, the name of the broadcast station, and the broadcast date/time.

Based on the generated program information, the program information processor 34 generates an OSD signal for displaying information of a program which is being broadcast. The program information processor 34 outputs the generated OSD signal to the display processor 36.

The AV decoder 35 decodes the digital video signal and audio signal which are output from the TS processor 32. For example, the video signal is compression-encoded in a predetermined format (e.g. MPEG-2, or H.264). Thus, the AV decoder 35 decodes the compression-encoded video signal. The AV decoder 35 outputs the decoded video signal and audio signal to the display processor 36.

The display processor 36 converts the digital video signal, which has been output by the AV decoder 35, to an analog video signal which can be displayed by the display device 2A. The display processor 36 outputs the analog video signal to the display device 2A. The display device 2A displays video on the screen by using the analog video signal which has been output by the display processor 36. In addition, the display processor 36 can also output an OSD signal, such as captions or a program guide, to the display device 2A. The display processor 36 outputs to the display device 2A, for example, the OSD signal for displaying the information of the broadcast program that is being broadcast. The OSD signal is output by the program information processor 34. Using the video signal and OSD signal, the display device 2A displays a video image, on which captions and a program table are superimposed, on the screen. In the meantime, the display processor 36 can selectively output the video signal or the OSD signal to the display device 2A.

In addition, the display processor 36 may convert the digital audio signal, which has been output by the AV decoder 35, to an analog audio signal which can be played by a speaker. The display processor 36 outputs this analog audio signal, for example, to a speaker (not shown) provided on the display device 2A. The speaker plays audio, based on the input analog audio signal.

Next, the network processor 37 controls communication between the server apparatus 1 and the client apparatus 2 via a network. Specifically, the network processor 37 detects that the server apparatus 1 and the client apparatus 2 have been connected via the network. The network processor 37 notifies the reception manager 39 that the server apparatus 1 has been connected. In addition, the network processor 37 transmits data to the server apparatus 1, responding to requests by respective components in the client apparatus 2. Besides, the network processor 37 receives data which has been transmitted by the server apparatus 1, and outputs the received data to the respective components in the client apparatus 2.

After executing negotiations with the server apparatus 1 via the network processor 37, the reception manager 39 requests the server apparatus 1 to deliver the program information 15B and video content data 15A. The reception manager 39 includes a reception controller 391, a function information receiver 392 and a function information transmitter 393.

Specifically, the function information receiver 392 receives apparatus capability information (first apparatus capability information) indicative of the function which is possessed by the server apparatus 1, the apparatus capability information being transmitted by the server apparatus 1. As described above, the apparatus capability information indicates, for example, what kind of delivery control function is possessed by the server apparatus 1. The function information receiver 392 outputs the received apparatus capability information of the server apparatus 1 to the reception controller 391.

Responding to the reception of the apparatus capability information of the server apparatus 1, the reception controller 391 requests the function information transmitter 393 to transmit apparatus capability information (second apparatus capability information), which is indicative of the function possessed by the client apparatus 2, to the server apparatus 1.

Complying with the request by the reception controller 391, the function information transmitter 393 transmits the apparatus capability information, which is indicative of the function possessed by the client apparatus 2, to the server apparatus 1. As described above, the apparatus capability information of the client apparatus 2 indicates, for example, what kind of playback control function is possessed by the client apparatus 2.

Subsequently, the reception controller 391 requests the server apparatus 1 to deliver the program information which is associated with recorded programs. For example, responding to the user's operation with use of the operation module 40, the reception controller 391 requests the delivery of the program information. In the operation module 40, for example, an operation for instructing delivery of program information and video content data is input. The reception controller 391 receives the program information which has been transmitted by the server apparatus 1 in response to the request.

As described above, the server apparatus 1 (delivery controller 211) transmits the first program information to the client apparatus 2 if the client apparatus 2 has the playback control function of content that is not protected in units of a program, like loop-recorded content, and transmits the second program information to the client apparatus 2 if the client apparatus 2 does not have this playback control function. Accordingly, the reception controller 391 receives the first program information or second program information, which has been transmitted by the server apparatus 1. Then, the reception controller 391 outputs the received program information to the program information processor 34.

Based on the first program information or second program information which has been output by the reception controller 391, the program information processor 34 generates an OSD signal for displaying a table (i.e. recorded program table) including objects indicative of video content data which can be delivered by the server apparatus 1. This recorded program table is displayed, for example, in a program guide format, in a tree format or in a list format. In addition, the objects indicative of the video content data are, for example, a button, text, or a cell in a list or table. The program information processor 34 outputs the generated OSD signal to the display processor 36.

To be more specific, when the first program information has been output by the reception controller 391 (i.e. when the client apparatus 2 has the playback control function of content that is not protected in units of a program), the program information processor 34 generates, by using the first program information, an OSD signal for displaying a recorded program table which excludes a program which has been erased, and includes a program which has begun to be erased (i.e. a program which is being currently erased). In addition, the program information processor 34 may display, on the recorded program table, an object indicative of an erasure timing of each recorded program (e.g. a boundary bar indicating up to which part of a program has already been erased), by using the information indicative of the erasure timing of each recorded program, this information being included in the first program information.

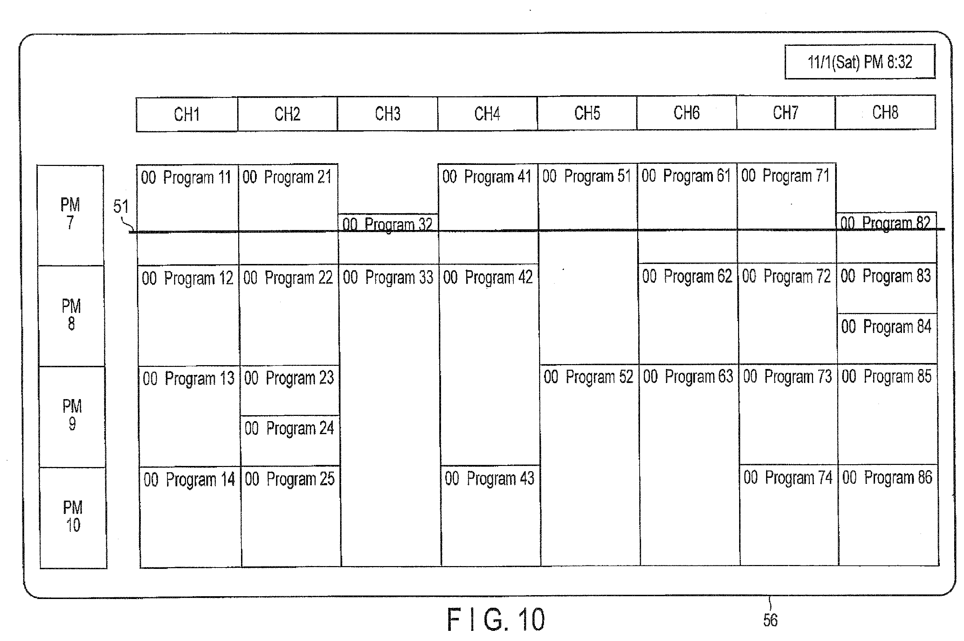

When the second program information has been output by the reception controller 391 (i.e. when the client apparatus 2 does not have the playback control function), the program information processor 34 generates, by using the second program information, an OSD signal for displaying a recorded program table which includes neither a program which has been erased nor a program which has begun to be erased. In the meantime, the program information processor 34 may generate an OSD signal for displaying a recorded program table which does not include programs which will shortly begin to be erased (e.g. programs which will begin to be erased within a second threshold time from the present time point). Examples of this recorded program table will be described with reference to FIG. 10 to FIG. 12.

The display processor 36 outputs to the display device 2A the OSD signal for displaying the recorded program table, which has been output by the program information processor 34. Using the OSD signal, the display device 2A displays video including the program table on the screen. Thereby, the user who uses the client apparatus 2 can easily confirm the information of the video content data 15A which was recorded in the server apparatus 1.

Incidentally, since it is possible that the recording and erasure of programs are being successively executed in the server apparatus 1, the reception controller 391 may request delivery of program information at predetermined time interval (e.g. in every minute). Thereby, the program information which is used in the client apparatus 2 can be updated.

The reception controller 391 requests delivery of video content data (program), for example, in accordance with the user's operation using the operation module 40. For example, using the operation module 40, the user selects one of the programs shown in the recorded program table. The reception controller 391 requests the server apparatus 1 to deliver the selected program. Then, the reception controller 391 receives the video content data which has been transmitted by the server apparatus 1 in response to the request. In the meantime, when the selected (delivered) program is a program has begun to be erased, the reception controller 319 receives that part of the video content data, which has not yet been erased. The reception controller 391 outputs the received video content data to the playback controller 48. Under the control of the playback controller 48, normal playback or special playback is controlled, and the content data is output to the AV decoder 35.

The AV decoder 35 decodes the digital video signal and audio signal in the video content data which has been output by the reception controller 391. The AV decoder 35 outputs the decoded video signal and audio signal to the display processor 36.

The display processor 36 converts, as described above, the digital video signal, which has been output by the AV decoder 35, to an analog video signal which can be displayed by the display device 2A, and outputs the analog video signal to the display device 2A. The display device 2A displays video on the screen by using the analog video signal which has been output by the display processor 36. In addition, the display processor 36 may convert the digital audio signal, which has been output by the AV decoder 35, to an analog audio signal which can be played by a speaker, and may output the analog audio signal to a speaker provided on the display device 2A. The speaker plays audio, based on the input analog audio signal. Thereby, the user who uses the client apparatus 2 can view the selected program.

FIG. 3 shows an example of a communication sequence which is executed between the server apparatus 1 and the client apparatus 2. In the example illustrated in FIG. 3, it is assumed that the server apparatus 1 has the delivery control function in which successive erasure of recorded programs is taken into account, and the client apparatus 2 has the playback control function in which successive erasure of recorded programs is taken into account. The server apparatus 1 and client apparatus 2 execute negotiations relating to the presence/absence of such functions.

To start with, the server apparatus 1 transmits to the client apparatus 2 the apparatus capability information indicating that the server apparatus 1 has the delivery control function in which successive erasure of recorded programs is taken into account (S11). Responding to the reception of the apparatus capability information which has been transmitted by the server apparatus 1, the client apparatus 2 transmits to the server apparatus 1 the apparatus capability information indicating that the client apparatus 2 has the playback control function in which successive erasure of recorded programs is taken into account (S12). Then, the client apparatus 2 requests the server apparatus 1 to deliver program information corresponding to recorded programs recorded by the server apparatus 1 (i.e. recorded programs stored by the server apparatus 1) (S13). Responding to the request by the client apparatus 2, the server apparatus 1 transmits to the client apparatus 2 the first program information for a client apparatus having the playback control function in which successive erasure of recorded programs is taken into account (S14). The client apparatus 2 displays, for example, a program table in a program guide format on the screen, by using the first program information which has been transmitted by the server apparatus 1.

FIG. 4 shows another example of the communication sequence between the server apparatus 1 and the client apparatus 2. In the example illustrated in FIG. 4, it is assumed that the server apparatus 1 has the delivery control function in which successive erasure of recorded programs is taken into account, but the client apparatus 2 does not have the playback control function in which successive erasure of recorded programs is taken into account. The server apparatus 1 and client apparatus 2 execute negotiations relating to the presence/absence of such functions.

To start with, the server apparatus 1 transmits to the client apparatus 2 the apparatus capability information indicating that the server apparatus 1 has the delivery control function in which successive erasure of recorded programs is taken into account (S21). Responding to the reception of the apparatus capability information which has been transmitted by the server apparatus 1, the client apparatus 2 transmits to the server apparatus 1 the apparatus capability information indicating that the client apparatus 2 does not have the playback control function in which successive erasure of recorded programs is taken into account (S22). Then, the client apparatus 2 requests the server apparatus 1 to deliver program information corresponding to recorded programs recorded by the server apparatus 1 (i.e. recorded programs stored by the server apparatus 1) (S23). Responding to the request by the client apparatus 2, the server apparatus 1 transmits to the client apparatus 2 the second program information for a client apparatus which does not have the playback control function in which successive erasure of recorded programs is taken into account (S24). The client apparatus 2 displays, for example, a program table in a tree format on the screen, like the case of an ordinary DMP apparatus, by using the second program information which has been transmitted by the server apparatus 1.

Next, FIG. 5 shows an example of first apparatus capability information which is transmitted by the server apparatus 1. The first apparatus capability information includes, for example, information indicative of the server apparatus 1, and information indicative of the function of the server apparatus 1. The first apparatus capability information is described, for example, in an XML format.

Specifically, in the first apparatus capability information, for example, by using "regza:X_REGZATIMESHIFT" tag, it is described that the server apparatus 1 is capable of delivering loop-recorded content ("SVRCAP=C000").

By receiving the first apparatus capability information, the client apparatus 2 can recognize that the server apparatus 1 has the delivery control function in which successive erasure of recorded programs is taken into account.

FIG. 6 shows an example of second apparatus capability information which is transmitted by the client apparatus 2. The second apparatus capability information includes, for example, information indicative of the client apparatus 2, and information indicative of the function of the client apparatus 2. The second apparatus capability information is described, for example, in an XML format.

Specifically, in the second apparatus capability information, for example, by using "regza:X_REGZAPLAY" tag, it is described what kind of player is the device type of the second client apparatus 2 ("PLYCAP=8000").

By receiving the second apparatus capability information, the server apparatus 1 can recognize that the client apparatus 2 has the playback control function in which successive erasure of recorded programs is taken into account.

FIG. 7 shows an example of the first program information which is transmitted by the server apparatus 1 to the client apparatus 2 having the playback control function in which successive erasure of recorded programs is taken into account. The first program information includes information indicative of recorded programs which are stored by the server apparatus 1. The first program information also includes information indicative of programs which have begun to be erased.

Specifically, the first program information includes a plurality of entries corresponding to a plurality of programs. An entry corresponding to a certain program includes, for example, the program title, the channel, and the broadcast date/time. The "program title" indicates the title of this program. The "channel" indicates the channel of broadcast of this program. The "broadcast date/time" indicates the date/time (date, beginning time and end time) of broadcast of this program. The first program information may include information indicative of the timing of erasure of programs.

FIG. 8 shows an example of the second program information which is transmitted by the server apparatus 1 to the client apparatus 2 which does not have the playback control function in which successive erasure of recorded programs is taken into account. The second program information includes information indicative of recorded programs which are stored by the server apparatus 1. The second program information does not include information indicative of programs which have begun to be erased.

Like the first program information, the second program information includes a plurality of entries corresponding to a plurality of programs. An entry corresponding to a certain program includes, for example, the program title, the channel, and the broadcast date/time. The "program title" indicates the title of this program. The "channel" indicates the channel of broadcast of this program. The "broadcast date/time" indicates the date/time (date, beginning time and end time) of broadcast of this program.

It can be said that the second program information shown in FIG. 8 is the information excluding, from the first program information shown in FIG. 7, the entries of the programs which have begun to be erased, for example, responding to the fact that the data amount of the video content data 15A stored in the storage device 15 has exceeded the first threshold or that the elapsed time from the recording has exceeded the threshold time.

Next, FIG. 9 shows an example of a recorded program table 55 which is displayed by the server apparatus 1. The server apparatus 1 displays the recorded program table 55 on the screen of the display device 1A by using the program information 15B stored in the storage device 15. The recorded program table 55 indicates recorded programs, for example, in a program guide format based on the channels and time (date/time) of broadcast of the programs. Specifically, a certain recorded program is indicated at a position on the recorded program table 55, which is specified by the time zone and the channel of the broadcast of this program. Accordingly, by using the recorded program table 55, it is understood that, for example, "Program 11" was broadcast by channel "1" (CH1) in a time zone from 7:00 PM to 8:00 PM. In addition, it is understood that, for example, "Program 32" was broadcast by channel "3" (CH3) in a time zone from 7:30 PM to 8:00 PM.

The recorded program table 55 may include programs, such as "Program 31" and "Program 81", which were already erased. Thus, a bar 51 designates a boundary indicating whether the video of a program can be played or not. In the recorded program table 55, it is indicated that the programs or parts of the programs, which are included in a region 52 above the bar 51, cannot be played. On the other hand, it is indicated that the programs or parts of the programs, which are included in a region below the bar 51, can be played. Thus, for example, the video corresponding to "Program 31" and a part of "Program 32", which are included in the region 52, cannot be played.

The user executes an operation of selecting a program, which is to be viewed, from the programs indicated in the recorded program table 55. Responding to the user's operation, the server apparatus 1 plays back the selected program: In addition, by confirming the position of the bar 51, the user can recognize a program, the entirety or a part of which was already erased, or the time until the erasure of each program.

Next, FIGS. 10, 11 and 12 show examples of a recorded program table which is displayed by the client apparatus 2. The client apparatus 2 displays the recorded program table on the screen of the display device 2A by using the program information which has been transmitted from the server apparatus 1.

FIG. 10 shows an example of a recorded program table 56 in a program guide format. In the example illustrated in FIG. 10, it is assumed that the client apparatus 2 has the playback control function in which successive erasure of recorded programs is taken into account. Since the client apparatus 2 has the playback control function in which successive erasure of recorded programs is taken into account, the first program information, which is transmitted to the client apparatus 2, may include information of a recorded program which has begun to be erased (i.e. a recorded program, a part of which has been erased). Accordingly, the recorded program table 56 may indicate a recorded program which has begun to be erased.

In the recorded program table 56, a plurality of objects indicative of a plurality of recorded programs are two-dimensionally arranged, based on the channels and time (date/time) of broadcast of the programs. It can thus be said that the recorded program table 56 is a table of programs which were broadcast in the past (past program table). A certain recorded program is indicated at a position on the recorded program table 56, which is specified by the time zone and the channel of the broadcast of this program. Accordingly, by using the recorded program table 56, it is understood that, for example, "Program 11" was broadcast by channel "1" (CH1) in a time zone from 7:00 PM to 8:00 PM. In addition, it is understood that, for example, "Program 32" was broadcast by channel "3" (CH3) in a time zone from 7:30 PM to 8:00 PM.

The recorded program table 56 may include programs, such as "Program 11" and "Program 32", which have already begun to be erased (programs, parts of which were erased). Thus, a bar 51 designates a boundary indicating whether the video of a program can be played or not. In the recorded program table 56, it is indicated that parts of the programs, which are included in a region above the bar 51, cannot be played. On the other hand, it is indicated that the programs or parts of the programs, which are included in a region below the bar 51, can be played. Thus, for example, the video corresponding to parts of "Program 11" and "Program 32", which are included in the region, cannot be played. By confirming the position of the bar 51, the user can recognize a program, a part of which was already erased, or the time until the erasure of each program.

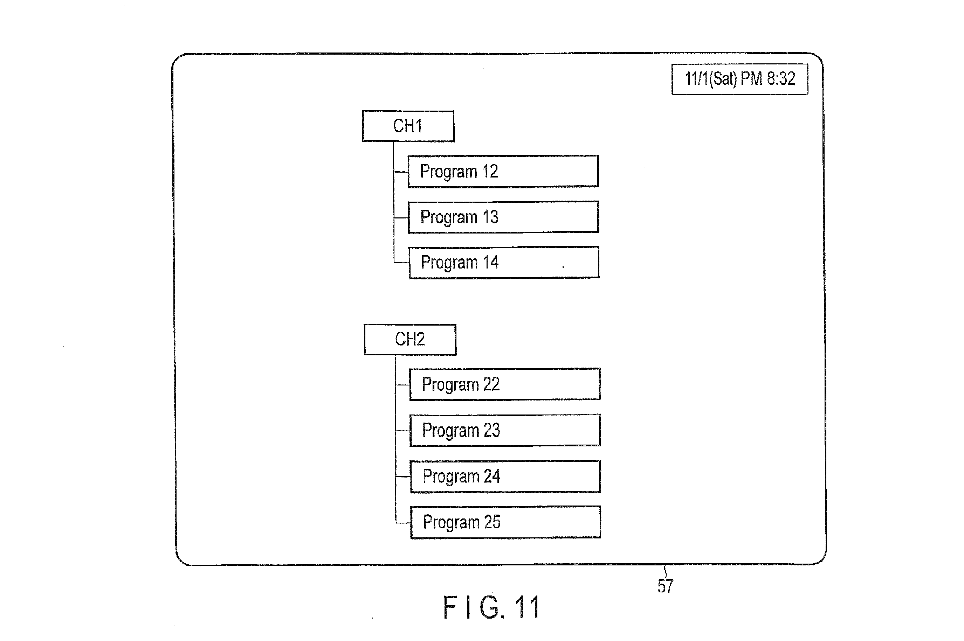

FIG. 11 shows an example of a recorded program table 57 in a tree format. The example illustrated in FIG. 11 is a general display in the case where the client apparatus 2 is a conventional DMP which does not have the playback control function in which successive erasure of recorded programs is taken into account. Since the client apparatus 2 does not have the playback control function in which successive erasure of recorded programs is taken into account, the second program information, which is transmitted to the client apparatus 2, does not include the information of a recorded program which has begun to be erased. Specifically, since an erased program or a program, which has begun to be erased, is not indicated, as in the recorded program table 57, it is possible to display a content list which does not affect playback control even in the conventional DMP.

Specifically, the recorded program table 57 includes objects indicative of "Program 12", "Program 13" and "Program 14" which are recorded programs broadcast by channel "1" (CH1), and objects indicative of "Program 22", "Program 23", "Program 24" and "Program 25" which are recorded programs broadcast by channel "2" (CH2).

The recorded program table 57 includes neither "Program 11" nor "Program 21", which are included in the recorded program table 56 shown in FIG. 10. The reason for this is that since the client apparatus 2 does not have the playback control function in which successive erasure of recorded programs is taken into account, the client apparatus 2 is unable to play the program, which has begun to be erased, from an intermediate part thereof. Thereby, it is possible to prevent a program, which cannot be played, from being displayed on the recorded program table 57.

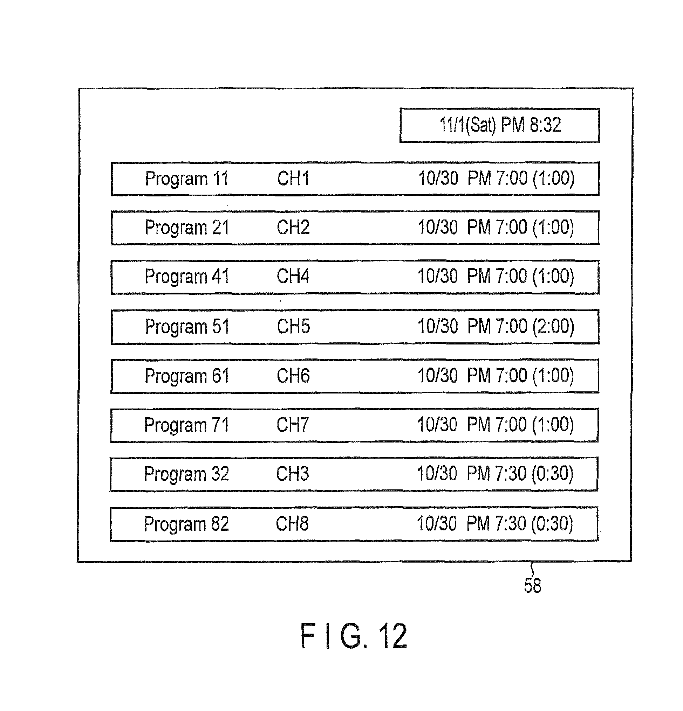

FIG. 12 shows an example of a recorded program table 58 in a list format. In the example illustrated in FIG. 12, it is assumed that the client apparatus 2 has the playback control function in which successive erasure of recorded programs is taken into account. Since the client apparatus 2 has the playback control function in which successive erasure of recorded programs is taken into account, the first program information, which is transmitted to the client apparatus 2, may include information of a recorded program which has begun to be erased. Accordingly, the recorded program table 58 may indicate a program which has begun to be erased.

In the recorded program table 58, objects indicative of recorded programs are arranged in an order based on broadcast dates/times (e.g. in an order beginning with the oldest program). Each of the objects indicative of the recorded programs indicates, for example, the program title, channel and broadcast date/time.

The user executes an operation of selecting a program, which is to be viewed, from the programs indicated in the above-described recorded program table 56, 57, 58. In response to the user's operation, the client apparatus 2 requests the server apparatus 1 to deliver the selected program. Complying with the request by the client apparatus 2, the server apparatus 1 transmits the video content data corresponding to the selected program to the client apparatus 2. Then, the client apparatus 2 plays the video of the selected program by using the video content data which has been transmitted by the server apparatus 1.

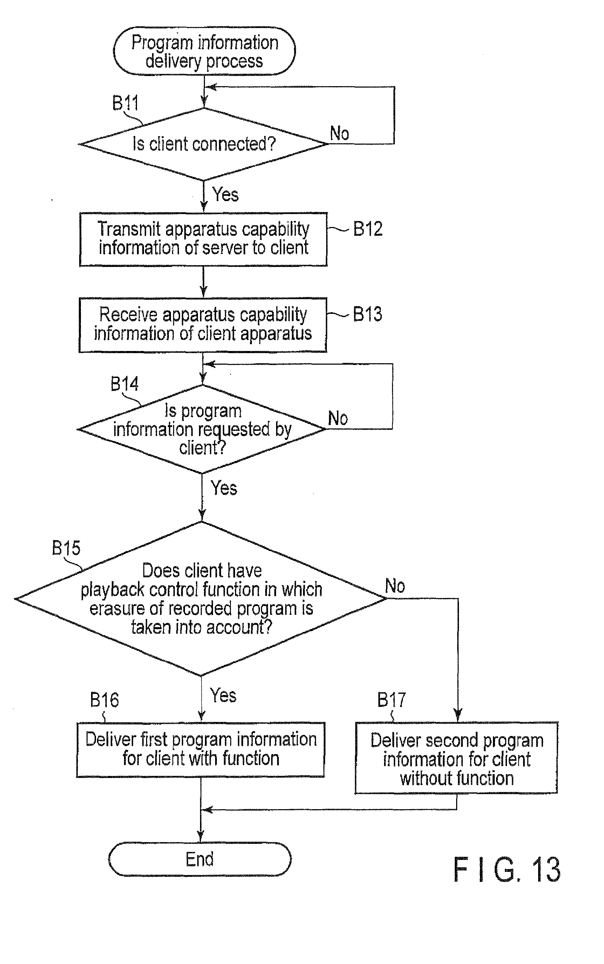

Next, referring to a flowchart of FIG. 13, a description is given of the procedure of a program information delivery process which is executed by the server apparatus 1.

To start with, the network processor 19 determines whether the client apparatus 2 has been connected to the network (LAN) (block B11). If the client apparatus 2 has not been connected to the network (NO in block E11), the process returns to block B11 to determine once again whether the client apparatus 2 has been connected to the network.

On the other hand, when the client apparatus 2 has been connected to the network (YES in block B11), the function information transmitter 212 transmits the apparatus capability information of the server apparatus 1 to the client apparatus 2 (block B12) The apparatus capability information of the server apparatus 1 indicates, for example, whether the server apparatus has the delivery control function of video content data 15A. Then, the function information receiver 213 receives the apparatus capability information of the client apparatus 2, which has been transmitted by the client apparatus 2 (block B13). The apparatus capability information of the client apparatus 2 indicates, for example, whether the client apparatus 2 has the playback control function of video content data 15A.

Then, the delivery controller 211 determines whether the delivery of program information has been requested by the client apparatus 2 (block B14). When the delivery of program information has not been requested (NO in block B14), the process returns to block B14 to determines once again whether the delivery of program information has been requested. On the other hand, when the delivery of program information has been requested (YES in block B14), the delivery controller 211 determines whether the client apparatus 2 has the playback control function (block B15).

If the client apparatus 2 has the playback control function (YES in block B15), the delivery controller 211 delivers to the client apparatus 2 the first program information for a client apparatus having the playback control function (block B16). If the client apparatus 2 does not have the playback control function (NO in block B15), the delivery controller 211 delivers to the client apparatus 2 the second program information for a client apparatus which does not have the playback control function (block B17).

By the above-described profess, the delivery controller 211 of the server apparatus 1 can deliver program information, according to whether the client apparatus 2 has the playback control function or not.

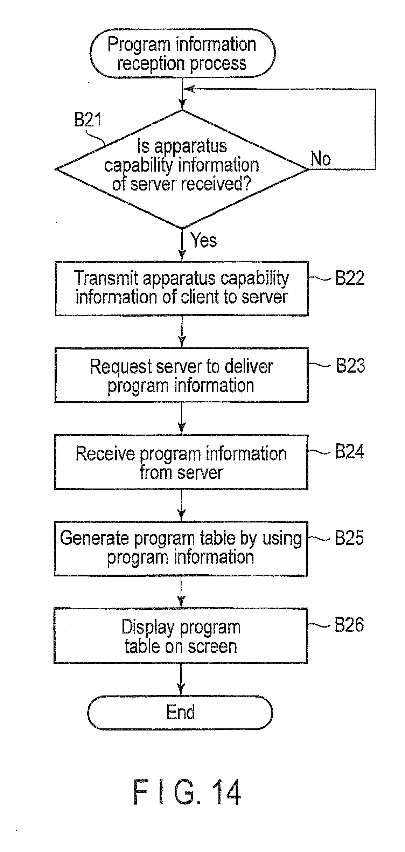

FIG. 14 is a flowchart illustrating an example of the procedure of a program information reception process which is executed by the client apparatus 2. In the description below, it is assumed that the client apparatus 2 and the server apparatus 1 are connected to the network.

To begin with, the function information receiver 392 determines whether the apparatus capability information of the server apparatus 1 has been received (block B21). When the apparatus capability information of the server apparatus 1 has not been received (NO in block B21), the process returns to block B21 to determine once again whether the apparatus capability information of the server apparatus 1 has been received. On the other hand, when the apparatus capability information of the server apparatus 1 has been received (YES in block B21), the function information transmitter 393 transmits the apparatus capability information of the client apparatus 2 to the server apparatus 1 (block B22).

Then, the reception controller 391 requests the server apparatus 1 to deliver program information (block B23). The server apparatus 1 delivers to the client apparatus 2 the program information corresponding to the apparatus capability information of the client apparatus 2. The reception controller 391 receives the program information which has been delivered by the server apparatus 1 (block B24). Then, using the received program information, the program information processor 34 generates a recorded program table in a predetermined display format (block B25). This display format is, for example, one of a program guide format, a tree format and a list format. For example, the program information processor 34 generates a recorded program table in a format which is selected by the user, from among the display formats which are supported by the client apparatus 2. The display processor 36 displays the generated recorded program table on the screen of the display device 2A (block B26).

By the above-described process, the user can select a program which is to be viewed, by using the displayed recorded program table. The selected program (video content data) is delivered to the client apparatus 2 by the server apparatus 1. The client apparatus 2 (AV decoder 35 and display processor 36) displays video on the screen by playing the delivered program. Thereby, the user can view the program which was selected by using the recorded program table.

As has been described above, according to the present embodiment, the information of the video content data, which was recorded in the server apparatus, can be presented to the user who uses the client apparatus in an easy-to-understand fashion. The server apparatus 1 delivers to the client apparatus 2 the program information (content information) corresponding to the recorded video content data 15A. Using the delivered program information, the client apparatus 2 displays on the screen the content table including the objects indicative of the video content data 15A recorded by the server apparatus 1. Using the displayed content table, the user can easily understand the video content data 15A recorded by the server apparatus 1. Therefore, the user can thoroughly view the recorded video content data 15A.

In addition, the server apparatus 1 (delivery controller 211) can deliver different program information to the client apparatus 2, according to whether the client apparatus 2 has the playback control function or not. Thereby, the client apparatus 2, which has the playback control function, can display a recorded program table including objects indicative of video content data which is being currently erased, and the client apparatus 2, which does not have the playback control function, can display a recorded program table which does not include objects indicative of video content data which is being currently erased.

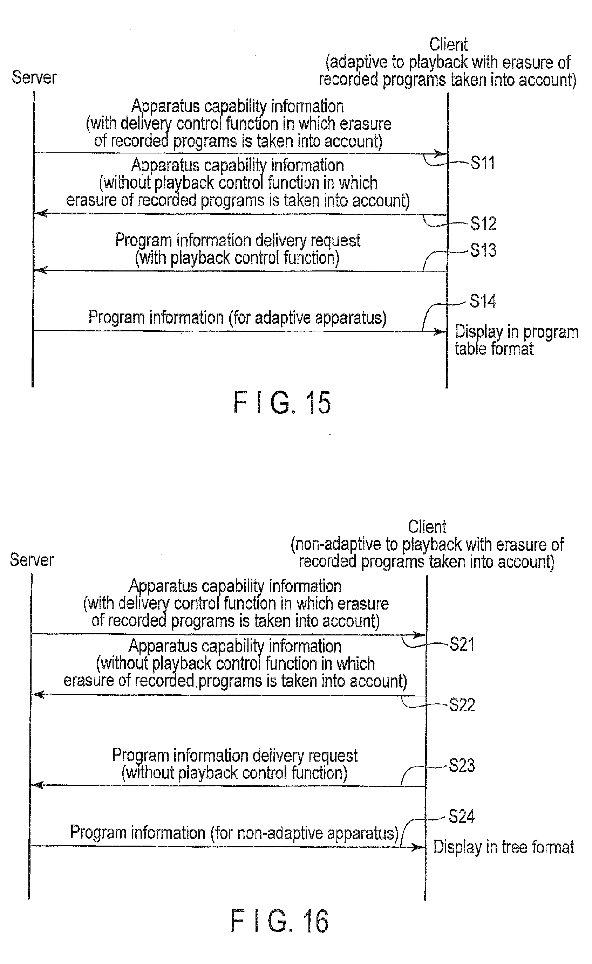

Besides, as shown in FIG. 15 and FIG. 16, instead of determining the apparatus capability of the client apparatus by the client-side capability information which is obtained in the negotiation step, it is possible to adopt a method in which capability information is included in a browse request from the client apparatus. Specifically, the display can be switched by the client-side selection, by incorporating information as to whether erased content is to be included or not, into arguments of the browse request.

All the procedures of the program information delivery process and program information reception process in this embodiment can be executed by software. Thus, the same advantageous effects as with the present embodiment can easily be obtained simply by installing a computer program, which executes the procedures of the program information delivery process and program information reception process, into an ordinary computer through a computer-readable storage medium which stores the computer program, and by executing the computer program.

## Claims

1. An electronic apparatus configured to be mutually connected to a client apparatus via a network, the electronic apparatus **characterized by** comprising:
a recoding controller (13) configured to record a plurality of broadcast video content data and a plurality of content information pieces in a storage device and to successively erase first video content data of the plurality of broadcast video content data from a beginning part of video when a data amount corresponding to the plurality of broadcast video content data in the storage device exceeds a threshold, the plurality of content information pieces being associated with the plurality of broadcast video content data;
a capability information receiver (213) configured to receive first apparatus capability information from the client apparatus, the first apparatus capability information being indicative of whether the client apparatus has a first function of controlling playback of the first video content data which is successively erased from the beginning part of the video; and
a content information transmitter (211) configured to transmit the plurality of content information pieces comprising first content information to the client apparatus if the first apparatus capability information indicates that the client apparatus has the first function, the first content information being associated with the first video content data.

2. The electronic apparatus of Claim 1, **characterized in that** the content information transmitter (211) is configured to transmit the plurality of content information pieces excluding the first content information to the client apparatus if the first apparatus capability information indicates that the client apparatus does not have the first function.

3. The electronic apparatus of Claim 1 or 2, **characterized in that** the content information transmitter (211) is configured to further transmit information indicative of an erasure timing of the first video content data.

4. The electronic apparatus of one of Claims 1 to 3, **characterized by** further comprising a capability information transmitter (211) configured to transmit second apparatus capability information to the client apparatus, the second apparatus capability information being indicative of whether the electronic apparatus has a second function of controlling delivery of the first video content data which is successively erased from the beginning part of the video.

5. The electronic apparatus of one of Claims 1 to 4, **characterized in that** the first video content data is data with an oldest date/time of recording in the storage device, among the plurality of broadcast video content data.

6. The electronic apparatus of one of Claims 1 to 5, **characterized by** further comprising a delivery module (211) configured to deliver second video content data of the plurality of broadcast video content data to the client apparatus in response to a request by the client apparatus.

7. An electronic apparatus configured to be mutually connected to a server apparatus via a network, the server apparatus being configured to record a plurality of broadcast video content data and a plurality of content information pieces in a storage device and to successively erase first content data of the plurality of broadcast video content data from a beginning part of video when a data amount corresponding to the plurality of broadcast video content data exceeds a threshold, the plurality of content information pieces being associated with the plurality of broadcast video content data, the electronic apparatus **characterized by** comprising:
a capability information transmitter (393) configured to transmit first apparatus capability information to the server apparatus, the first apparatus capability information being indicative of whether the electronic apparatus has a first function of controlling playback of the first video content data which is successively erased from the beginning part of the video;
a content information receiver (391) configured to receive the plurality of content information pieces comprising first content information from the server apparatus if the electronic apparatus has the first function, the first content information being associated with the first video content data; and
a display module (36, 2A) configured to display a content table on a screen by using the plurality of content information pieces comprising the first content information, the content table comprising a plurality of objects indicative of the plurality of broadcast video content data.

8. The electronic apparatus of Claim 7, **characterized in that** the content information receiver (391) is configured to receive the plurality of content information pieces excluding the first content information if the electronic apparatus does not have the first function, and
the display module (36, 2A) is configured to display a content table on the screen by using the plurality of content information pieces excluding the first content information, the content table comprising a plurality of objects indicative of the plurality of broadcast video content data excluding the first video content data.

9. The electronic apparatus of Claim 7 or 8, **characterized in that** the plurality of content information pieces comprise date/time information and channel information, the date/time information being indicative of dates/times of broadcast of the plurality of broadcast video content data, the channel information being indicative of channels of broadcast of the plurality of broadcast video content data, and
the display module (36, 2A) is configured to display the content table comprising the plurality of objects which are two-dimensionally arranged based on the date/time information and the channel information.

10. The electronic apparatus of Claim 9, **characterized in that** the content information receiver (391) is configured to further receive information indicative of an erasure timing of the first video content data, and
the display module (36, 2A) is configured to further display an object indicative of the erasure timing on the content table.

11. The electronic apparatus of one of Claims 7 to 10, **characterized by** further comprising a delivery request module (391) configured to request the server apparatus to deliver second video content data in response to one object having been selected from among the plurality of objects, the second video content data corresponding to the selected object.

12. A delivery control method of delivering video content data to a client apparatus which is mutually connected via a network, **characterized by** comprising:
recording a plurality of broadcast video content data and a plurality of content information pieces in a storage device, and successively erasing first video content data of the plurality of broadcast video content data from a beginning part of video when a data amount corresponding to the plurality of broadcast video content data in the storage device exceeds a threshold, the plurality of content information pieces being associated with the plurality of video content data;
receiving apparatus capability information from the client apparatus, the apparatus capability information being indicative of whether the client apparatus has a function of controlling playback of the first video content data which is successively erased from the beginning part of the video; and
transmitting the plurality of content information pieces comprising first content information to the client apparatus if the apparatus capability information indicates that the client apparatus has the function, the content information being associated with the first video content data.
